# EUROPÄISCHE PATENTSCHRIFT

(11) **EP 3 056 278 B1**
(45) Veröffentlichungstag und Bekanntmachung des Hinweises auf die Patenterteilung: **12.06.2019**
(21) Anmeldenummer: 15154429.3
(22) Anmeldetag: 10.02.2015
(51) Int. Cl.: B02C 15/00

(54) **Getriebeanordnung für eine Vertikalmühle**
Drive assembly for a vertical mill
Système d'engrenage pour un moulin vertical

(43) Veröffentlichungstag der Anmeldung: 17.08.2016
(73) Patentinhaber: Flender GmbH, 46395 Bocholt (DE)
(72) Erfinder: Kücükyavuz, Ali Kemal, 44652 Herne (DE); Schmeink, Franz, 46395 Bocholt (DE); Brun, Steffen, 46325 Borken (DE)
(74) Vertreter: Maier, Daniel Oliver

(56) Entgegenhaltungen:
- EP-A1- 2 025 409
- WO-A1-2008/049545
- WO-A1-2015/003716
- DE-A1-102005 030 145
- DE-C1- 4 227 512
- DE-U1- 9 111 017
- JP-A- 2010 284 629

## Beschreibung

Die vorliegende Erfindung betrifft eine Getriebeanordnung für eine Vertikalmühle.

Vertikalmühlen werden für die Zerkleinerung von Kalkstein, Klinker, Schlacke, Kalk, Gips und Kohle in der Baustoffindustrie und bei der Kohleaufbereitung eingesetzt.

Aus der Druckschrift DE 42 27 512 C1 ist ein Getriebeaggregat für den Antrieb einer Mühle mit einer vertikalen Drehachse bekannt. Das Getriebeaggregat weist eine vertikale Welle auf, an der ein Kegelrad angeordnet ist, das mit einem Kegelritzel kämmt. Das Kegelritzel, das Kegelrad und die vertikale Drehachse gehören zu einer Getriebehauptstufe. Das Kegelritzel ist mittels einer Ritzelwelle antreibbar, die wiederum durch eine Zwischenwelle antreibbar ist. Die Ritzelwelle und die Zwischenwelle sind teilweise in einem Gehäuse aufgenommen, das zu einer Getriebevorstufe gehört. Das Gehäuse der Getriebevorstufe ist über Zentrierbolzen fest mit einem Gehäuse der Getriebehauptstufe verbunden. Die Getriebevorstufe steht dabei im Wesentlichen radial unterhalb eines Mahltellers hervor.

EP 2511010 A1 (Siemens AG) 17.10.2012 beschreibt ein herkömmliches Kegelrad-Planetengetriebe. Das Getriebe umfasst ein Gehäuse, an dem eine mit einem Motor verbindbare Antriebswelle gelagert ist. Die Antriebswelle, die eine horizontale Drehachse aufweist und über Wälzlager im Gehäuse gelagert ist, steht aus dem Gehäuse vor und kann mittels einer Kupplung über eine Passfederverbindung mit einer Motorwelle verbunden werden. An dem anderen freien Ende der Antriebswelle ist ein Kegelritzel ausgebildet, das mit einem an einer sich vertikal erstreckenden Zwischenwelle gehaltenen Kegelrad kämmt. Die Zwischenwelle wiederum treibt ein Planetengetriebe an, dessen Abtrieb rotatorisch mit einem Mühlenteller gekoppelt ist.

WO 2008049545 A1 (Gebr. Pfeiffer AG) 02.05.2008 beschreibt ein aktiv redundantes Antriebssystem für Wälzmühlen. Eine ständige Verfügbarkeit von wenigstens zwei Antrieben ist durch die Anordnung von mehr als zwei Antrieben gesichert, wobei die wenigstens zwei Antriebe die erforderliche Mahlleistung der Wälzmühle erbringen. Die Antriebe besitzen je ein Ritzel, das mit einem unterhalb des Mahltellers angeordneten Zahnkranz kämmt. Jedes Antriebsmodul umfasst einen Elektromotor, eine Kupplung und ein Kegelstirnradgetriebe, angeordnet auf einem Grundrahmen als Transporteinheit. Bei Ausfall eines Antriebs kann dieser auf einer Lafette aus dem Zahneingriff gezogen werden, ohne den Mahlvorgang zu unterbrechen.

Zum weitgehenden Ausgleich betriebsbedingter Winkelabweichungen zwischen den Achsen von Ritzeln und Zahnkranz müssen die Ritzel kippbeweglich gelagert werden. Außerdem ist die Ölschmierung des Zahneingriffs von Ritzeln und Zahnkranz nur aufwändig gegen die Umgebung abzudichten.

EP 2025409 A1 (Loesche GmbH) 18.02.2009 beschreibt ein Mühlengetriebe für Wälzmühlen, mit einer Kegelradstufe für den Krafteintrieb und wenigstens einer Planetenradstufe für den mahlschüsselseitigen Kraftabtrieb. Die Kegelradstufe weist anstelle eines einzigen großen Antriebs mehrere separate Antriebe und entsprechende Kegelritzel auf, welche zum gemeinsamen Eingriff in das Kegelrad angeordnet sind.

Eine Kegelradstufe mit mehreren separaten Antrieben, wie sie in der EP 2025409 A1 beschrieben ist, erfordert eine Justierung, um ein ausreichendes Tragbild der Zahnflanken des Kegelrads und der damit kämmenden Kegelritzel zu erzielen. Diese Justierung erfolgt in der Regel durch ein axiales Verschieben der beteiligten Wellen. Die Justierung der Kegelradwelle für alle eingreifenden Kegelritzel bedingt einen Kompromiss, der nicht für alle Kegelritzel optimale Tragbilder und damit Einschränkungen bei der Leistungsfähigkeit der Kegelradstufe zur Folge hat. Infolgedessen müssen die Bauteile zum Ausgleich entsprechend überdimensioniert werden. Insofern ist die in EP2025409A1 beschriebene Lösung zwar grundsätzlich möglich, aber auch teuer.

Der Erfindung liegt die Aufgabe zugrunde, eine verbesserte Getriebeanordnung für eine Vertikalmühle bereitzustellen.

Die Aufgabe wird erfindungsgemäß durch eine Getriebeanordnung mit den in Anspruch 1 angegebenen Merkmalen gelöst.

Die erfindungsgemäße Getriebeanordnung ist zum Antrieb einer Vertikalmühle geeignet. In einer Vertikalmühle wird in einen Mahlteller aufgegebenes Mahlgut in der Regel mittels Mahlwal zen beaufschlagt und somit zermahlen. Die Getriebeanordnung weist eine Zentralwelle auf, welche um eine vertikale Drehachse rotierbar ist. Die Zentralwelle ist mit einem Abtriebsflansch der Getriebeanordnung rotatorisch gekoppelt. Somit kann auch ein mit dem Abtriebsflansch verbundener Mahlteller einer Vertikalmühle in Drehung versetzt werden. Der Abtriebsflansch kann auch als "Getriebeflansch" der Getriebeanordnung bezeichnet werden. An der Zentralwelle ist ein Stirnrad drehfest angeordnet, so dass ein auf das Stirnrad wirkender Antrieb die Zentralwelle und somit auch den Mahlteller rotieren lässt. Die Getriebeanordnung zum Antrieb der Vertikalmühle umfasst eine oder mehrere Getriebe-Einheiten, welche jeweils Getrieberadpaarungen aufweist. Die Getrieberadpaarungen der einen oder mehreren Getriebe-Einheiten umfassen abtriebsseitig, d.h. an einer der Zentralwelle zugewandten Getriebeseite, jeweils ein Ritzel zum Eingriff in das Stirnrad der Zentralwelle. Zwei miteinander in Eingriff stehende Getriebezahnräder bilden eine Getrieberadpaarung; diese kann eine Getriebeübersetzung erzeugen. Die Getriebe-Einheiten weisen jeweils mindestens eine Getriebepaarung auf; dabei wird auch das abtriebsseitige Ritzel, welches mit dem Stirnrad der Zentralwelle in Eingriff steht, als Getriebepaarung der Getriebe-Einheit gezählt. Sämtliche Getrieberadpaarungen der ein oder mehreren Getriebe-Einheiten sind jeweils vertikal unter dem Abtriebsflansch angeordnet. Dabei sind die Getrieberadpaarungen innerhalb, d.h. auf der der Zentralwelle zugewandten Seite, einer vorzugsweisen zylindrischen Umfangsfläche angeordnet, welche der Außenumfang des Abtriebsflansches vertikal nach unten projiziert um die Zentralwelle beschreibt. Diese Umfangsfläche trennt einen Bereich, in dem der Abtriebsflansch ein Drehmoment erbringt, von der Umgebung und kann mit dem Begriff "Wirklinie" griffig beschrieben werden. Die eine oder mehreren Getriebe-Einheiten sind jeweils so auf einer Verschiebevorrichtung angeordnet, dass die abtriebsseitigen Ritzel durch Verschieben der jeweiligen Getriebe-Einheit mittels der Verschiebevorrichtung in Ein- und Ausgriff mit dem Zentral-Stirnrad gebracht werden können.

Die erfindungsgemäße Lösung basiert auf der Idee, ein leistungsverzweigtes Antriebssystem einer Vertikalmühle zu schaffen, welches die Vorteile der bewährten Kegelrad-Planetengetriebe mit denen der modularen Mehrfach-Antriebe kombiniert. Durch modulare Einschubgetriebe-Einheiten, sog. "Plug-in"-Einheiten, wird ein Auswechseln einzelner Getriebe-Einheiten ermöglicht, ohne dass das vollständige Getriebe unterhalb des Mühlentellers weggezogen werden muss.

Die Getrieberadpaarungen der Getriebe-Einheiten sitzen innerhalb der Abtriebswirklinie. Dadurch wird eine kompakte Antriebseinheit mit geringem Bauraum geschaffen. Außerdem ist die Ölabdichtung des Getriebes, im Vergleich zu einer Zahnkranzlösung mit Ölblechhaube, einfacher umsetzbar, z.B. durch einen Wellendichtring und/oder eine berührungslose Labyrinthdichtung an der Eingangswelle der Getriebe-Einheiten.

Die Kosten der erfindungsgemäßen Lösung sind vergleichbar mit denen eines herkömmlichen Kegelrad-Planetengetriebes; gleichzeitig hat die erfindungsgemäße Lösung aber eine geringere Bauhöhe. Radiale Stöße, die im Mahlprozess entstehen, werden wie bei herkömmlichen Kegelrad-Planetengetrieben durch den (Hauptstufen-)Planetenradträger über ein Lager abgefangen. Das führt dazu, dass kein kippbewegliches Ritzel wie bei einer Zahnkranzlösung benötigt wird.

Die Erfindung erzielt eine Leistungserhöhung auf Basis der bewährten Getriebekonzepte des herkömmlichen Kegelrad-Planetengetriebes. Die Modularität der Getriebeanordnung führt zu einer verbesserten Serviceability durch Einschubgetriebe in Form einer "Plug-in"-Lösung", was Ausrichtarbeiten erübrigt oder zumindest stark vermindert. Zudem ist die Übersetzung im Nachhinein veränderbar. Die "Plug-in"-Einheiten können einfach in das Ölkreislaufschema der Getriebe integriert werden, ohne zusätzliche Anschlüsse und ohne separate Öl-Aggregate; dabei kann ein Öl-Tank in die Getriebeanordnung integriert werden.

Im Vergleich zu den herkömmlichen Kegelrad-Planetengetriebe-Lösungen im Bereich von Vertikalmühlen ergibt sich mit der vorliegenden Erfindung eine reduzierte Bauhöhe. Trotzdem ist die vorliegende Erfindung kompatibel zu den herkömmlichen Kegelrad-Planetengetriebe-Lösungen; beispielsweise kann die bewährte Auslegung und Gestaltung der Axiallagerung der Zentralwelle von den herkömmlichen Kegelrad-Planetengetriebe-Lösungen im Bereich von Vertikalmühlen übernommen werden und die Hauptstufe wie herkömmlich ausgebildet werden.

Auch für den Wartungsbetrieb ergeben sich mit der Erfindung Vorteile: es ist eine klar definierte Schnittstelle der einen oder mehreren Getriebe-Einheiten zu einem jeweiligen Motorantrieb vorhanden.

Als Antriebsmotor kann ein Festdrehzahl-Antrieb oder ein drehzahlvariabler Antrieb Verwendung finden, z.B. ein konventioneller Motor wie Schleifringmotor, Asynchronmotor oder Permanentsynchronmotor. Der Motor, und ggf. zusätzlich ein Frequenzumrichter, können auf einer Schwinge angeordnet sein und/oder mittels einer Laterne mit der jeweiligen Getriebe-Einheit verbunden sein.

Erfindungsgemäß ist die Zentralwelle mittels eines Planetengetriebes, umfassend mindestens eine Planetengetriebestufe, für einen mahltellerseitigen Kraftabtrieb rotatorisch gekoppelt. Von Vorteil ist dabei, dass die für die Vertikalmühle erforderliche Gesamtuntersetzung zum Teil von den verschiebbaren Getriebe-Einheiten und zum Teil von der nachgeschalteten Planetenstufe erbracht wird. Daher können die Getriebe-Einheiten kleiner ausgelegt werden.

Vorteilhafte Ausgestaltungen und Weiterbildungen der Erfindung sind in den abhängigen Ansprüchen angegeben.

Gemäß einer bevorzugten Ausgestaltung der Erfindung sind die eine oder mehreren Getriebe-Einheiten jeweils als Kegel-Stirnradgetriebe-Einheit ausgebildet, welche antriebsseitig eine Kegelradstufe mit einer mit einem Motor verbindbaren Kegelritzelwelle und abtriebsseitig mindestens eine der Kegelradstufe nachgeordnete Stirnradstufe aufweist. Beispielsweise können der Kegelradstufe ein bis drei Stirnradstufen nachgeordnet sein, mit Schräg- und/oder Geradverzahnung. Dabei bilden die miteinander kämmenden Zahnräder der Getriebestufen Getrieberadpaarungen.

Es ist auch möglich, dass die "Plug-in"-Einheiten ohne Kegelradstufe, d.h. ausschließlich mit Stirnradstufen, ausgebildet sind, wobei die Motorachse des Antriebsmotors vertikal verläuft. Von Vorteil ist dabei, dass ausschließlich einfacher herzustellende Stirnradstufen verwendet werden.

Gemäß einer bevorzugten Ausgestaltung der Erfindung verläuft die Drehachse der Kegelritzelwelle horizontal. Von Vorteil ist dabei, dass Standard-Kegelradstufen eingesetzt werden können, die in Bezug auf Tragbildverhalten und Tragbildeinstellung optimiert sind und relativ kurze Lieferzeiten haben.

Gemäß einer bevorzugten Ausgestaltung der Erfindung weist die Getriebeanordnung mindestens zwei separate Getriebe-Einheiten auf. Von Vorteil ist dabei, dass die durch Leistungsverzweigung erreichte aktive Redundanz eine Erhöhung der Sicherheit bedeutet. Gemäß Grote, K.-H.; Feldhusen, J. (Hrsg.), Dubbel - Taschenbuch für den Maschinenbau, Springer-Verlag Berlin Heidelberg, 23. Auflage, 2011, ISBN 978-2-642-17305-9, Seite F17, macht man folgende Unterscheidung: Bei aktiver Redundanz beteiligen sich alle Systemelemente aktiv an der Aufgabe; bei passiver Redundanz stehen Systemelemente in Reserve, und ihre Aktivierung macht einen Schaltungsvorgang nötig.

Gemäß einer bevorzugten Ausgestaltung der Erfindung sind die mindestens zwei Getriebe-Einheiten symmetrisch um das Stirnrad verteilt angeordnet. Von Vorteil ist dabei, dass die La gerung der das Stirnrad tragenden Zentralwelle relativ gering belastet wird.

Gemäß einer bevorzugten Ausgestaltung der Erfindung sind die mindestens zwei Getriebe-Einheiten asymmetrisch um das Stirnrad verteilt angeordnet. Von Vorteil ist dabei, dass auf bauliche Gegebenheiten einer bestehenden Mühlenkonstruktion Rücksicht genommen werden kann.

Gemäß einer bevorzugten Ausgestaltung der Erfindung sind die eine oder mehreren Getriebe-Einheiten jeweils in einem Getriebegehäuse mit einer antriebsseitigen Öffnung zum Durchtritt einer Eingangswelle angeordnet, wobei zur Ölabdichtung des Ringspalts zwischen dem Gehäuse und der Eingangswelle eine Dichtung, z. B. ein Wellendichtring und/oder eine Labyrinthdichtung, angeordnet ist. Von Vorteil ist dabei, dass die Ölabdichtung, im Vergleich zu einer Zahnkranzlösung mit Ölblechhaube, viel einfacher durch einen Wellendichtring an der Eingangswelle umsetzbar ist. Die Eingangswelle der Getriebe-Einheit ist vorzugsweise eine Kegelritzelwelle.

Gemäß einer bevorzugten Ausgestaltung der Erfindung sind die rotierenden Bauteile der einen oder mehreren Getriebe-Einheiten in Wälz- und/oder Gleitlagern gelagert. Je nach Einsatzgebiet, d.h. Lagerung einer schnell oder langsam laufenden Welle, bieten Wälz- oder Gleitlager Vorteile.

Die Aufgabe wird erfindungsgemäß außerdem durch eine Antriebsvorrichtung für eine Vertikalmühle, umfassend eine erfindungsgemäße Getriebeanordnung, gelöst, wobei die ein oder mehreren Getriebe-Einheiten jeweils mit einem separaten Antriebsmotor verbunden sind.

Gemäß einer bevorzugten Ausgestaltung der Erfindung sind die Antriebsmotoren jeweils direkt mit den Eingangswellen der Getriebe-Einheiten verbunden, ohne eine dazwischen geschaltete Kupplung. Eine direkte Anbindung, d.h. eine Verbindung von Antriebsmotor und Getriebe-Einheit ohne Kupplung, hat Vortei le in Bezug auf die Regelung und Steuerung eines Antriebsstrangs.

Die Aufgabe wird außerdem durch eine Vertikalmühle mit einer erfindungsgemäßen Antriebsvorrichtung gelöst.

Erfindungsgemäß ist zudem eine Verwendung einer Getriebeanordnung wie oben beschrieben oder einer Antriebsvorrichtung wie oben beschrieben in einer Vertikalmühle.

Im Folgenden wird die Erfindung anhand mehrerer Ausführungsbeispiele unter Zuhilfenahme der beiliegenden Zeichnung erläutert. Es zeigt jeweils schematisch und nicht maßstabsgetreu
- FIG 1: eine schematische Seitenansicht einer herkömmlichen Vertikalmühle;
- FIG 2: einen Schnitt einer Getriebeanordnung;
- FIG 3: eine Draufsicht einer Getriebe-Einheit;
- FIG 4: eine Draufsicht einer Getriebeanordnung; und
- FIG 5: eine Seitenansicht einer Antriebsvorrichtung.

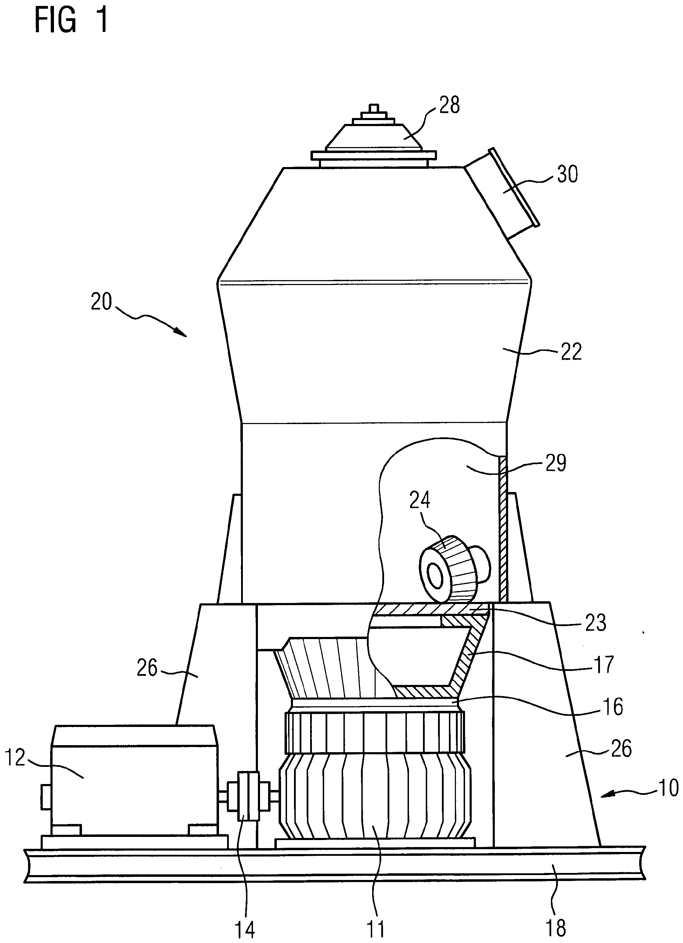

Figur 1 zeigt eine Seitenansicht einer herkömmlichen Vertikalmühle 20 mit teilweiser Schnittansicht. Innerhalb eines Mühlengehäuses 22 befindet sich ein Mahlraum 29 mit einem rotierbaren Mahlteller 23, auf den von oben Mahlgut gegeben wird. Auf dem Mahlteller 23 abrollende Mahlwalzen 24 zerkleinern das auf dem Mahlteller 23 liegende Mahlgut. Zum Zuführen von Mahlgut und Luftströmen in den Mahlraum 29 weist das Mühlengehäuse 22 in seinem oberen Teil durch Deckel 28, 30 verschließbare Öffnungen auf. Das Mühlengehäuse 22 wird durch eine auf einem Mühlenfundament 18 abgestützte Stützkonstruktion 26 getragen, welche unterhalb des Mahlraums 29 Raum für eine Antriebsvorrichtung 10 zum Antreiben des Mahltellers 23 schafft. Die ebenfalls auf dem Mühlenfundament 18 abgestützte Antriebsvorrichtung 10 umfasst einen Antriebsmotor 12, eine Getriebeanordnung 11 sowie eine Kupplung 14, welche eine Ausgangswelle des Antriebsmotors 12 mit einer Eingangswelle der Getriebeanordnung 11 verbindet. Die Kupplung 14 kann eine hydrodynamische Kupplung, eine hochflexible Kupplung, o.ä. sein.

Die Getriebeanordnung 11 ist ein Kegelradplanetengetriebe, welches eine eingangsseitige Kegelradstufe, welche die Rotationsachse um 90 Grad dreht, und mindestens eine der Kegelradstufe nachschaltetet ausgangsseitige Planetengetriebestufe aufweist. Die Siemens AG vertreibt derartige Kegelrad-Planetengetriebe unter den Bezeichnungen KMP und KMPS. Die abtriebsseitige Rotation der Planetengetriebestufe wird mittels eines Abtriebsflansches 16 der Getriebeanordnung 11 auf den Mahlteller 23 übertragen. Dabei ist der Abtriebsflansch 16 mithilfe einer Unterkonstruktion 17, welche die Form eines sich nach unten verjüngenden Kegelstumpfes aufweist, mit dem Mahlteller 23 verbunden.

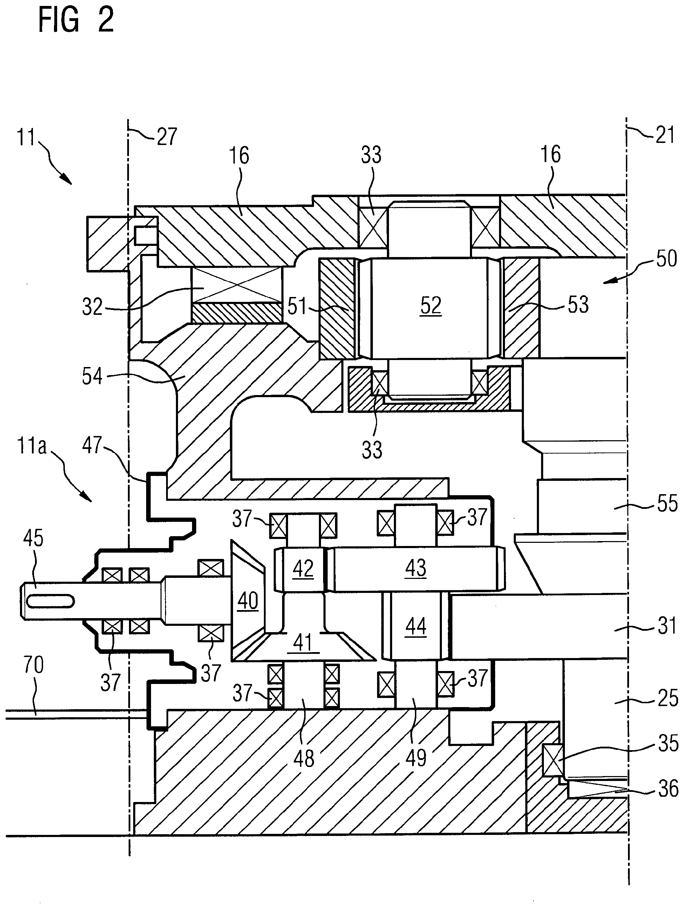

Figur 2 zeigt schematisch einen Schnitt einer linksseitigen Hälfte einer erfindungsgemäßen Getriebeanordnung 11 für den Antrieb einer Vertikalmühle. Auf eine Wiedergabe der rechtsseitigen Hälfte wurde aus Symmetriegründen verzichtet. Die Getriebeanordnung 11 umfasst antriebsseitig eine verschiebbare Getriebe-Einheit 11a und abtriebsseitig ein Planetengetriebe 50.

Das Planetengetriebe 50 weist eine vertikale Wellenlage auf. Das einstufig ausgebildete Planetengetriebe 50 umfasst ein Hohlrad 51, einen Planetenträger mit darin gelagerten Planetenrädern 52 und ein Sonnenrad 53, welches mit einer sich vertikal durch die Getriebeanordnung 11 erstreckenden, um eine vertikale Drehachse 21 rotierbaren Zentralwelle 25 verbunden ist. Das Hohlrad 51 der Planetenstufe ist fest mit einem Getriebegehäuse 54 verbunden. Der Planetenträger der Planetenstufe ist mit dem Abtriebsflansch 16 verbunden oder einteilig mit dem Abtriebsflansch 16 ausgebildet und mittels eines Axiallagers 32 gelagert.

Die Zentralwelle 25 ist mittels eines in einem Schmierstoffsumpf angeordneten Radiallagers 35 sowie eines Axiallagers 36 gelagert. Die Zentralwelle 25 und das Sonnenrad 53 der Planetenstufe sind über eine Kupplung 55 verbunden. Das Planetengetriebe 50 kann auch zweistufig ausgebildet sein; dann sind der Planetenträger der antriebsseitigen Planetenstufe und das Sonnenrad der abtriebsseitigen Planetenstufe drehfest miteinander verbunden. Derartige zweistufige Planetengetriebe sind dem Fachmann aus dem Stand der Technik bekannt, beispielsweise aus Fig. 1 der EP 2 295 147 B1 (Siemens AG) 10.09.2009.

Die dem Planetengetriebe 50 vorgeschaltete Getriebe-Einheit 11a bildet eine modulare Einschubgetriebe-Einheit, eine sog. "Plug-in"-Einheit. Durch die Modularität wird ein Auswechseln einzelner Getriebe-Einheiten ermöglicht, ohne dass das vollständige Getriebe unterhalb der Mühle weggezogen werden muss.

Die Getriebe-Einheit 11a umfasst ein Getriebegehäuse 47 und mehrere in dem Getriebegehäuse 47 in Lagern 37 gelagerte Getrieberadpaarungen 40 bis 44, welche in der Getriebe-Einheit 11a ausgebildet sind. Die Getrieberadpaarungen 40 bis 44 der Getriebe-Einheit 11a sind vertikal unter dem Abtriebsflansch 16 angeordnet; dabei sind die Getrieberadpaarungen 40 bis 44 innerhalb, d.h. auf der der Zentralwelle 25 zugewandten Seite, einer Umfangsfläche 27 angeordnet, welche der Außenumfang des Abtriebsflanschs 16 vertikal nach unten projiziert um die Vertikalmühle beschreibt. Die Umfangsfläche 27 trennt einen Bereich, in dem auf dem Abtriebsflansch 16 das Mühlendrehmoment bereitgestellt wird, von der Umgebung, und kann mit dem Begriff "Wirklinie" griffig beschrieben werden.

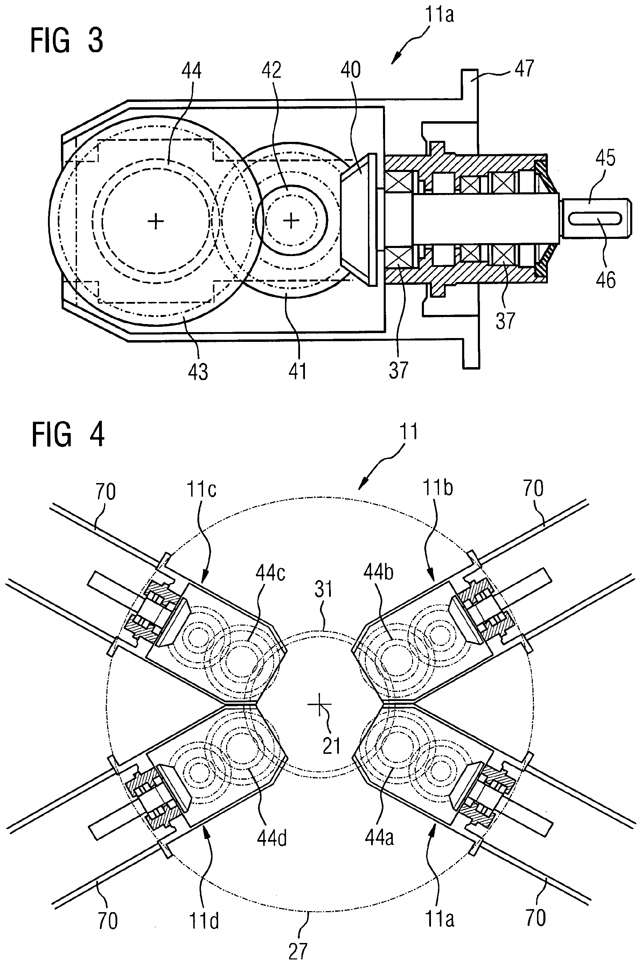

Die Getriebe-Einheit 11a umfasst eine waagrecht angeordnete, in dem Getriebegehäuse 47 der Getriebe-Einheit 11a drehbar in Lagern 37 gelagerte Kegelritzelwelle 45, an deren mühlenseitigen Ende drehfest ein Kegelritzel 40 angeordnet ist. Das Kegelritzel 40 kämmt mit einem Kegelrad 41, welches an einer in dem Getriebegehäuse 47 der Getriebe-Einheit 11a drehbar in Lagern 37 gelagerten ersten vertikalen Welle 48 drehfest an geordnet ist. Ein Stirnrad-Ritzel 42, welches ebenfalls auf der ersten vertikalen Welle 48 drehfest angeordnet ist, kämmt wiederum mit einem Stirnrad 43, welches an einer in dem Getriebegehäuse 47 der Getriebe-Einheit 11a drehbar in Lagern 37 gelagerten zweiten vertikalen Welle 49 drehfest angeordnet ist. Ein abtriebsseitiges Stirnrad-Ritzel 44, welches ebenfalls auf der zweiten vertikalen Welle 49 drehfest angeordnet ist, kämmt mit einem Stirnrad 31, welches auf der Zentralwelle 25 drehfest angeordnet ist. Die Abfolge der Getrieberäder 40 bis 44 in einer Getriebeeinheit 11a ist gut zu erkennen in der in Fig. 3 dargestellten Draufsicht der Getriebe-Einheit 11a vertikal von Oben.

Somit weist die Getriebe-Einheit 11a abtriebsseitig ein Ritzel 44 auf, welches zum Eingriff in das Stirnrad 31 der Zentralwelle 25 vorgesehen ist. Dabei ist die Getriebe-Einheit 11a so auf einer Verschiebevorrichtung 70 angeordnet, dass das abtriebsseitige Ritzel 44 durch Verschieben der Getriebe-Einheit 11a mittels der Verschiebevorrichtung 70 in Ein- und Ausgriff mit dem Zentral-Stirnrad 31 gebracht werden können. Die Verschiebevorrichtung 70 umfasst Schienen, auf welchen eine an der Unterseite des Getriebegehäuses 47 der Getriebe-Einheit 11a angeordnete Lafette gleiten kann.

Der Antrieb der Vertikalmühle erfolgt über einen oder mehrere Antriebsmotoren, vorzugsweise elektrische Motoren. Dazu werden die Getriebe-Einheiten 11a jeweils von einem Antriebsmotor angetrieben, indem eine Ausgangswelle eines Antriebsmotors mit der Kegelritzelwelle 45 der Getriebe-Einheit 11a verbunden wird, z.B. mithilfe einer Passfederverbindung 46.

Figur 4 ist eine schematische Draufsicht auf vier symmetrisch um die Zentralwelle einer Vertikalmühle angeordnete Getriebe-Einheiten 11a bis 11d, welche gleichzeitig mit dem an der Zentralwelle angeordneten Stirnrad 31 in Eingriff stehen. Zu Revisions- oder Wartungszwecken können einzelne Getriebe-Einheiten 11a bis 11d samt angekoppeltem Motor aus dem Antrieb herausgezogen werden, so dass das jeweilige abtriebs seitige Ritzel 44a in Ausgriff mit dem Stirnrad 31 der Zentralwelle kommt. Zum Entfernen einer Getriebe-Einheit 11a aus dem Antriebsstrang dient eine Verschiebevorrichtung umfassend Schienen 70. Da Getriebe, Motor, Kupplung und Ölversorgungsanlage auf einer Lafette angeordnet sind, ist der Austausch einer Getriebe-Einheit 11a zu Revisionszwecken kein Problem.

Falls die Antriebsvorrichtung der Vertikalmühle zwei oder mehr Getriebe-Einheiten und jeweils damit verbundene separate Antriebsmotoren, d.h. zwei oder mehr Antriebsmodule, umfasst, ist es mit der auf diese Weise somit vorliegenden Redundanz möglich, die Mühle 20 auch mit einer verringerten Zahl von Antrieben zu betreiben. Auch bei Ausfall eines Antriebsmoduls, umfassend eine Getriebe-Einheit 11a und einen angekoppelten Antriebsmotor, kann dieses Antriebsmodul auf einer Lafette aus dem Zahneingriff gezogen werden, ohne den Mahlvorgang zu unterbrechen.

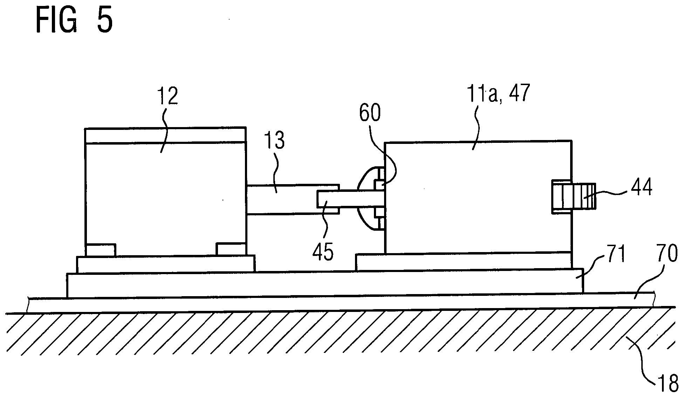

Figur 5 zeigt eine Seitenansicht einer erfindungsgemäßen Antriebsvorrichtung, umfassend eine Getriebe-Einheit 11a und einen Elektromotor 12. Die Getriebe-Einheit 11a und der Elektromotor 12 sind beide auf einer Lafette 71 montiert, welche mittels Schienen 70 auf einem Fundament 18 verfahrbar ist, so dass ein abtriebsseitiges Ritzel 44 der Getriebe-Einheit 11a in Ein- und Ausgriff mit einem Stirnrad einer Zentralwelle der Vertikalmühle bringbar ist. Eine Motorwelle 13 und eine Kegelritzelwelle 45 der Getriebe-Einheit 11a sind mittels einer Passfederverbindung drehfest oder mittels einer Kupplung drehelastisch miteinander verbunden.

Die Getriebe-Einheit 11a weist in ihrem Getriebegehäuse 47 eine antriebsseitige Öffnung zum Durchtritt einer Eingangswelle 45 der Getriebe-Einheit 11a auf. Zur Ölabdichtung des Ringspalts zwischen dem Gehäuse 47 und der Eingangswelle 45 ist um die Eingangswelle 45 eine Dichtung 60, insbesondere ein Wellendichtring und/oder eine Labyrinthdichtung, angeordnet.

## Patentansprüche

1. Getriebeanordnung (11) für eine Vertikalmühle (20), umfassend eine um eine vertikale Drehachse (21) rotierbare Zentralwelle (25) mit einem drehfest daran angeordneten Stirnrad (31), wobei die Zentralwelle (25) mit einem Abtriebsflansch (16) der Getriebeanordnung (11) rotatorisch gekoppelt ist, und ein Außenumfang des Abtriebsflansches (16) vertikal nach unten eine Umfangsfläche (27) projiziert, wobei
- die Getriebeanordnung (11) eine oder mehrere Getriebe-Einheiten (11a, 11b, 11c, 11d) mit jeweiligen Getrieberadpaarungen (40 bis 44) umfasst, welche abtriebsseitig jeweils ein Ritzel (44, 44a, 44b, 44c, 44d) zum Eingriff in das Stirnrad (31) der Zentralwelle (25) aufweisen,
**dadurch gekennzeichnet, dass**
- die Getrieberadpaarungen (40 bis 44) der ein oder mehreren Getriebe-Einheiten jeweils vertikal unter dem Abtriebsflansch (16) und radial innerhalb der Umfangsfläche (27) angeordnet sind, und
- die eine oder mehreren Getriebe-Einheiten (11a, 11b, 11c, 11d) jeweils so auf einer Verschiebevorrichtung (70, 71) angeordnet sind, dass die abtriebsseitigen Ritzel (44, 44a, 44b, 44c, 44d) durch Verschieben der jeweiligen Getriebe-Einheit (11a, 11b, 11c, 11d) mittels der Verschiebevorrichtung (70, 71) in Ein- und Ausgriff mit dem Stirnrad (31) der Zentralwelle (25) gebracht werden können, wobei die Zentralwelle (25) mittels mindestens einer Planetengetriebestufe (50) mit dem Abtriebsflansch (16) gekoppelt ist.

2. Getriebeanordnung nach Anspruch 1,
wobei die eine oder mehreren Getriebe-Einheiten (11a) jeweils als Kegel-Stirnradgetriebe-Einheit ausgebildet sind, welche antriebsseitig eine Kegelradstufe (40, 41) mit einer mit einem Motor verbindbaren Kegelritzelwelle (45) und mindestens eine der Kegelradstufe (40, 41) nachgeordnete Stirnradstufe (42, 43; 44, 31) aufweist.

3. Getriebeanordnung nach Anspruch 2,
wobei die Drehachse der Kegelritzelwelle (45) horizontal verläuft.

4. Getriebeanordnung nach einem der vorhergehenden Ansprüche,
wobei die Getriebeanordnung (11) mindestens zwei separate Getriebe-Einheiten (11a, 11b, 11c, 11d) aufweist.

5. Getriebeanordnung nach Anspruch 4,
wobei die mindestens zwei Getriebe-Einheiten (11a, 11b, 11c, 11d) symmetrisch um das Stirnrad (31) verteilt angeordnet sind.

6. Getriebeanordnung nach Anspruch 4,
wobei die mindestens zwei Getriebe-Einheiten (11a, 11b, 11c, 11d) asymmetrisch um das Stirnrad (31) verteilt angeordnet sind.

7. Getriebeanordnung nach einem der vorhergehenden Ansprüche,
wobei die eine oder mehreren Getriebe-Einheiten (11a, 11b, 11c, 11d) jeweils in einem Getriebegehäuse (47) mit einer antriebsseitigen Öffnung zum Durchtritt einer Eingangswelle (45) angeordnet sind, wobei zur Ölabdichtung des Ringspalts zwischen dem Gehäuse (47) und der Eingangswelle (45) eine Dichtung (60), insbesondere ein Wellendichtring und/oder eine Labyrinthdichtung, angeordnet ist.

8. Getriebeanordnung nach einem der vorhergehenden Ansprüche,
wobei die rotierenden Bauteile der ein oder mehreren Getriebe-Einheiten (11a, 11b, 11c, 11d) in Wälz- und/oder Gleitlagern (37) gelagert sind.

9. Antriebsvorrichtung für eine Vertikalmühle (20), umfassend eine Getriebeanordnung (11) nach einem der vorhergehenden Ansprüche, wobei die ein oder mehreren Getriebe-Einheiten (11a, 11b, 11c, 11d) jeweils mit einem separaten Antriebsmotor (12) verbunden sind.

10. Antriebsvorrichtung nach Anspruch 9,
wobei die Antriebsmotoren (12) jeweils direkt mit den Eingangswellen (45) der Getriebe-Einheiten (11a, 11b, 11c, 11d) verbunden sind, ohne eine dazwischen geschaltete Kupplung.

11. Vertikalmühle (20) mit einer Antriebsvorrichtung nach Anspruch 9 oder 10.

12. Verwendung einer Getriebeanordnung nach einem der Ansprüche 1 bis 8 oder einer Antriebsvorrichtung nach einem der Ansprüche 9 oder 10 in einer Vertikalmühle.

## Claims

1. Drive arrangement (11) for a vertical mill (20), incorporating a central shaft (25) which can rotate about a vertical axis of rotation (21) with a spur gear (31) arranged on it in a rotatably fixed manner, wherein the central shaft (25) has a rotational coupling to a drive offtake flange (16) of the drive arrangement (11), and an external perimeter of the drive offtake flange (16) projects a peripheral surface (27) vertically downward, wherein - the drive arrangement (11) incorporates one or more drive units (11a, 11b, 11c, 11d), each with a drive gear pair (40 to 44), each of which on the drive offtake side has a pinion gear (44, 44a, 44b, 44c, 44d) for the purpose of engaging into the spur gear (31) of the central shaft (25),
charaterised in that
- each of the drive gear pairs (40 to 44) of the one or more drive units is arranged vertically below the drive offtake flange (16) and radially inside the peripheral surface (27)
- each of the one or more drive units (11a, 11b, 11c, 11d) is arranged on a traversing mechanism (70, 71) in such a way that the pinion gears (44, 44a, 44b, 44c, 44d) on the drive offtake side can, by moving the drive unit (11a, 11b, 11c, 11d) concerned by means of the traversing mechanism (70, 71), be engaged with and disengaged from the spur gear (31) on the central shaft (25), wherein the central shaft (25) is coupled to the drive offtake flange (16) by means of at least one planetary drive stage (50).

2. Drive arrangement according to claim 1,
wherein each of the one or more drive units (11a) is in the form of a beveled/spur gear drive unit which, on the drive input side, has a beveled gear stage (40, 41) with a beveled pinion gear shaft (45) which can be connected to a motor and at least one spur gear stage (42, 43; 44, 31) downstream from the beveled gear stage (40, 41).

3. Drive arrangement according to claim 2,
wherein the axis of rotation of the beveled pinion gear shaft (45) runs horizontally.

4. Drive arrangement according to one of the preceding claims,
wherein the drive arrangement (11) has at least two separate drive units (11a, 11b, 11c, 11d).

5. Drive arrangement according to claim 4,
wherein the at least two drive units (11a, 11b, 11c, 11d) are arranged with a symmetrical distribution about the spur gear (31) .

6. Drive arrangement according to claim 4,
wherein the at least two drive units (11a, 11b, 11c, 11d) are arranged with an asymmetrical distribution about the spur gear (31) .

7. Drive arrangement according to one of the preceding claims,
wherein each of the one or more drive units (11a, 11b, 11c, 11d) is arranged in a drive housing (47) with an opening on the drive input side to allow an input shaft (45) to pass through, wherein for the purpose of providing an oil seal a seal (60), in particular a shaft sealing ring and/or a labyrinth seal is arranged on the annular gap between the housing (47) and the input shaft (45).

8. Drive arrangement according to one of the preceding claims,
wherein the rotating components of the one or more drive units (11a, 11b, 11c, 11d) are mounted in roller and/or friction bearings (37).

9. Drive mechanism for a vertical mill (20), incorporating a drive arrangement (11) according to one of the preceding claims, wherein each of the one or more drive units (11a, 11b, 11c, 11d) is connected to a separate drive motor (12).

10. Drive mechanism according to claim 9,
wherein each of the drive motors (12) is joined directly to the input shafts (45) of the drive units (11a, 11b, 11c, 11d) with no coupling connected between them.

11. Vertical mill (20) with a drive mechanism according to claim 9 or 10.

12. Use in a vertical mill of a drive arrangement according to one of claims 1 to 8 or of a drive mechanism according to one of claims 9 or 10.

## Revendications

1. Système (11) d'engrenage d'un broyeur (20) vertical, comprenant un arbre (25) central tournant autour d'un axe (21) de rotation vertical et ayant une roue (31) droite, qui en est solidaire en rotation, l'arbre (25) central étant couplé en rotation à un manchon (16) de sortie du système (11) d'engrenage, et un pourtour extérieur du manchon (16) de sortie étant la projection verticalement vers le bas d'une surface (27) de pourtour, dans lequel
- le système (11) d'engrenage comprend une ou plusieurs unités (11a, 11b, 11c, 11d) d'engrenage ayant des appariements (40 à 44) respectifs de paires de roues d'engrenage, qui ont, du côté de la sortie, chacune un pignon (44, 44a, 44b, 44c, 44d) d'engrenage dans la roue (31) droite de l'arbre (25) central,
**caractérisé en ce que**
- les appariements (40 à 44) de roue d'engrenage de l'une ou des plusieurs unités d'engrenage sont disposés chacun verticalement sous le manchon (16) de sortie et radialement dans la surface (27) de pourtour et
- l'unité ou les plusieurs unités (11a, 11b, 11c, 11d) d'engrenage sont montées chacune sur un dispositif (70, 71) de déplacement, de manière à ce que les pignons (44, 44a, 44b, 44c, 44d) du côté de la sortie puissent, par déplacement de l'unité (11a, 11b, 11c, 11d) d'engrenage respective, au moyen du dispositif (70, 71) de déplacement, être mis en prise et hors de prise avec la roue (31) droite de l'arbre (25) central, l'arbre (25) central étant accouplé au manchon (16) de sortie au moyen d'au moins un étage (50) d'engrenage épicycloïdal.

2. Système d'engrenage suivant la revendication 1,
dans lequel l'unité d'engrenage ou les plusieurs unités (11a) d'engrenage sont constituées chacune d'une unité d'engrenage à roue droite-conique, qui a, du côté d'entrée, un étage (40, 41) à roue conique ayant un arbre (45) de pignon conique pouvant être relié à un moteur et au moins un étage (42, 43; 44, 31) à roue droite monté en aval de l'étage (40, 41) à roue conique.

3. Système d'engrenage suivant la revendication 2,
dans lequel l'axe de rotation de l'arbre (45) à roue conique est horizontal.

4. Système d'engrenage suivant l'une des revendications précédentes,
dans lequel le système (11) d'engrenage a au moins deux unités (11a, 11b, 11c, 11d) distincte.

5. Système d'engrenage suivant la revendication 4,
dans lequel les au moins deux unités (11a, 11b, 11c, 11d) d'engrenage sont réparties symétriquement autour de la roue (31) droite.

6. Système d'engrenage suivant la revendication 4,
dans lequel les au moins deux unités (11a, 11b, 11c, 11d) d'engrenage sont réparties dissymétriquement autour de la roue (31) droite.

7. Système d'engrenage suivant l'une des revendications précédentes,
dans lequel la une ou les plusieurs unités (11a, 11b, 11d) d'engrenage sont disposées chacune dans un carter (47) d'engrenage ayant une ouverture du côté d'entrée pour le passage d'un arbre (45) d'entrée, dans lequel une étanchéité (60), notamment une bague d'étanchéité d'arbre et/ou une étanchéité à labyrinthe, est disposée pour rendre étanche vis-à-vis de l'huile l'espace annulaire entre le carter (47) et l'arbre (45) d'entrée.

8. Système d'engrenage suivant l'une des revendications précédentes,
dans lequel les pièces tournantes de la ou des plusieurs unités (11a, 11b, 11c, 11d) d'engrenage sont montées dans des paliers (37) à roulement et/ou lisses.

9. Dispositif d'entraînement d'un broyeur (20) vertical, comprenant un système (11) d'engrenage suivant l'une des revendications précédentes, dans lequel la une ou les plusieurs unités (11a, 11b, 11c, 11d) d'engrenage sont reliées chacune à un moteur (12) d'entraînement distinct.

10. Dispositif d'entraînement suivant la revendication 9,
dans lequel les moteurs (12) d'entraînement sont reliés chacun directement aux arbres (45) d'entrée des unités (11a, 11b, 11c, 11d) d'engrenage sans un embrayage monté entre eux.

11. Broyeur (20) vertical ayant un dispositif d'entraînement suivant la revendication 9 ou 10.

12. Utilisation d'un système d'engrenage suivant l'une des revendications 1 à 8 ou d'un dispositif d'entraînement suivant l'une des revendications 9 ou 10 dans un broyeur vertical.
